## Europäisches Patentamt
## European Patent Office
## Office européen des brevets

(11) Numéro de publication: **0 084 005**
**A1**

# (12) DEMANDE DE BREVET EUROPEEN

(21) Numéro de dépôt: 83400027.5

(22) Date de dépôt: 05.01.83

(51) Int. Cl.³: **A 01 F 25/20**
**B 65 G 65/38**

(30) Priorité: 06.01.82 FR 8200084

(43) Date de publication de la demande:
20.07.83 Bulletin 83/29

(84) Etats contractants désignés:
AT BE CH DE GB IT LI LU NL SE

(71) Demandeur: Simon, Claude
Ferme d'Hyppeville Grosville
F-50340 Les Pieux(FR)

(72) Inventeur: Simon, Claude
Ferme d'Hyppeville Grosville
F-50340 Les Pieux(FR)

(74) Mandataire: Casanova, André et al,
CABINET ARMENGAUD JEUNE CASANOVA,
AKERMAN, LEPEUDRY 23 boulevard de Strasbourg
F-75010 Paris(FR)

(54) Appareil de désilage.

(57) L'invention concerne un appareil de désilage du genre comprenant, dans un silo cylindrique, un bras radial sensiblement horizontal qui s'étend entre l'axe vertical du silo et sa paroi cylindrique, qui est mû en rotation de manière autonome autour de l'axe du silo et qui est muni de disques-outils sensiblement parallèles entre eux et perpendiculaires à la surface libre de la matière à désiler sur laquelle le bras radial repose par des roues porteuses dont certaines sont également motrices.

Cet appareil est caractérisé en ce que lesdits disques-outils (4a ... 4n) sont entraînes en rotation autour de leurs axes respectifs (12a ... 12n) montés sur ledit bras radial (3), sont peu inclinés par rapport audit bras radial (3) et sont munis d'outils de coupe (15a ... 15n) sur leur face frontale dans le sens de déplacement (F) du bras radial (3), le sens de rotation des disques-outils (4a ... 4n) étant celui qui entraîne vers l'intérieur du silo les matières ainsi désilées.

Application au désilage de matières organiques telles que le foin ou le fourrage.

./...

*Fig.1*

## Appareil de désilage

La présente invention concerne un appareil de désilage qui est disposé sur la surface libre horizontale de matières organiques, comme du foin haché, du fourrage, ou d'autres matières analogues, emmagasinées dans un silo cylindrique de dimensions importantes. Ainsi que le savent les spécialistes en la matière, un tel appareil se meut en rotation de manière autonome à la surface des matières ensilées, et il affouille ces matières qui sont extrêmement compactes pour les amener sous forme divisée vers le centre du silo où elles peuvent alors être reprises par un dispositif d'aspiration qui les conduit vers leur endroit d'utilisation.

Plus précisément, l'appareil de désilage selon l'invention est du genre comprenant un bras radial sensiblement horizontal qui s'étend entre l'axe vertical du silo et sa paroi cylindrique, qui repose sur la surface à désiler par une pluralité de roues porteuses verticales, qui est mû en rotation autour de l'axe du silo par certaines de ces roues porteuses qui sont également motrices, et qui est guidé au cours de son mouvement de rotation par des roues horizontales de guidage venant en appui sur la face interne de la paroi du silo.

De tels appareils de désilage sont connus et, généralement, leur bras radial est muni d'une chaîne sans fin qui s'étend sur toute sa longueur et qui entraîne des outils en forme de crochets dont la fonction est de creuser les matières ensilées, de les déchiqueter et de les entraîner vers le centre du silo où elles sont aspirées.

L'inconvénient majeur de ces dispositifs connus est qu'ils fonctionnent mal et que leur utilisateur constate trop souvent des blocages qui obligent à des réparations fréquentes. La raison en est, probablement, que les crochets entraînés par la chaîne sans fin se heurtent souvent à des agglomérats de matières à désiler qui bloquent le système, ce blocage étant, bien entendu, empiré par les crochets qui suivent celui qui a provoqué l'incident initial.

Quelle que soit la cause des pannes répétées que connaissent ces appareils de désilage, il faut souligner ici que l'interruption d'un tel dispositif entraîne des pertes considérables pour leur utilisateur parce que les exploitations agricoles ne peuvent travailler normalement que si le matières nécessaires comme le foin ou le fourrage leur sont fournies de manière régulière.

Un autre inconvénient de ces dispositifs connus provient de ce qu'ils ne permettent pas de désiler les mati ères proches de la paroi du silo. En outre, leur consommati d'énergie est importante et, enfin, leur entretien est onéreux, puisque le nettoyage de leurs chaînes de désilage est nécessairement fréquent et qu'il est compliqué.

Il a également été proposé de munir un bras radia tel que celui spécifié ci-dessus de disques-outils qui son parallèles entre eux et presque perpendiculaires au bras si lequel ils sont montés, qui sont fous sur leurs arbres respectifs et qui sont munis de couteaux s'étendant sensiblem dans leur plan.

De tels dispositifs ne peuvent convenir, de tout évidence, qu'au désilage de matières faiblement compactées ce qui n'est pas le cas lorsqu'il s'agit de silos dont la hauteur est importante et, par exemple, supérieure à dix mètres,    que l'on rencontre couramment de nos jours dans les exploitations agricoles.

Aussi, l'objet de la présente invention est un dispositif de désilage du genre spécifié ci-dessus qui ne présente pas les inconvénients des appareils connus, et qu en particulier, est extrêmement fiable pour de faibles coû de fabrication et d'entretien.

Pour résumer ce qui précède, on précisera tout d'abord que cet appareil est du genre comprenant, dans un silo cylindrique, un bras radial sensiblement horizontal c s'étend entre l'axe vertical du silo et sa paroi cylindric qui est mû en rotation de manière autonome autour de l'axe silo et qui est muni de disques-outils sensiblement parall les entre eux et perpendiculaires à la surface libre de la matière à désiler sur laquelle le bras radial repose par c roues porteuses dont certaines sont également motrices.

Selon l'invention, lesdits disques-outils sont entraînés en rotation autour de leurs axes respectifs montés sur ledit bras radial, ils sont peu inclinés par rapport audit bras radial et ils sont munis d'outils de coupe sur leur face frontale dans le sens de déplacement du bras radial, le sens de rotation desdits disques-outils étant celui qui entraîne vers l'intérieur du silo les matières ainsi désilées.

D'après cette définition, on comprend que, contrairement à tout ce qui a été fait jusqu'ici, l'appareil de désilage selon l'invention comprend des disques-outils qui sont mûs en rotation de manière autonome, qui sont munis de couteaux sur leur face avant et qui sont peu inclinés par rapport au bras radial, leur inclinaison sur ce bras étant, de préférence, comprise entre 0° et 20° et, avantageusement, voisine de 10°.

De façon surprenante, cette disposition évite toutes les pannes, tous les incidents de fonctionnement et toutes les difficultés qui sont quotidiennement constatés avec les dispositifs connus. En outre, le coût de fabrication de cet appareil selon l'invention est faible, et la fiabilité de son fonctionnement en rend l'entretien fort peu coûteux.

De préférence, le plan de chacun des disques-outils qui sont tous identiques entre eux, est décalé de celui du suivant de la même quantité et dans le même sens, les arbres de ces disques-outils étant montés dans des paliers qui sont fixés à intervalles réguliers le long du bras radial.

Avantageusement, le diamètre de chaque disque-outil est compris entre une et deux fois la distance qui sépare les arbres de deux disques-outils consécutifs, cette distance étant mesurée perpendiculairement à ces arbres.

Il est clair que ces dispositions sont avantageuses sur le plan de la construction mécanique, puisqu'ainsi les disques-outils, de même que leurs organes annexes, comme leurs paliers, leurs plaques de fixation sur le bras radial, et autres analogues, peuvent être réalisés en série.

La disposition des outils sur les disques-outils selon l'invention et leur configuration présente une importance non négligeable pour le fonctionnement de l'appareil de désilage selon la présente invention.

De préférence, chaque disque-outil est muni d'une pluralité d'outils dont chacun est constitué par une plaquette rectangulaire perpendiculaire au plan du disque-outil et prolongée vers l'avant et vers l'extérieur par un couteau en forme de parallélogramme qui est incliné par rapport au plan du disque-outil d'un angle compris avantageusement entre 20° et 40° et, de préférence, voisin de 30°.

De tels outils sont robustes et simples à fabriquer à partir d'une tôle métallique de forte épaisseur ; en outre, l'inclinaison qui est avantageusement donnée au plan du couteau facilite le désilage et évite, en particulier, tout bourrage des matières désilées entre le couteau et le disque-outil.

En ce qui concerne la configuration et la disposition de chaque couteau en forme de parallélogramme, on se placera pour les décrire en vue de face par rapport au disque qui supporte ces couteaux et on indiquera que, de préférence, le petit côté de chaque couteau qui est en avant dans le sens de rotation du disque-outil et qui constitue une arête d'attaque forme un angle inférieur à 10° et, de préférence, nul avec tout rayon du disque-outil qui passe par cette arête d'attaque. Quant au grand côté de chaque couteau qui est également en avant dans le même sens, il constitue une arête de coupe et il forme un angle compris entre 25° et 35°, et, de préférence, voisin de 30° avec tout rayon qui passe par l'arête d'attaque spécifiée ci-dessus.

De préférence, les outils en question sont montés sur leur disque-outil à l'intersection de cercles équidistants centrés sur le centre du disque-outil et de rayons de ce disque angulairement espacés de manière régulière, et ce, à raison d'un outil par rayon.

Avantageusement, la hauteur des plaquettes rectangulaires des outils, prise perpendiculairement au plan du disque-outil, va en décroissant du centre de ce dernier vers sa périphérie où cette hauteur peut d'ailleurs devenir sensiblement nulle.

La configuration des outils selon la présente invention et leur disposition sur les disques correspondants, telles qu'elles viennent d'être décrites, permettent d'obtenir un désilage hautement performant et sans que l'on constate les pannes et les incidents de fonctionnement répétés qui affectent ce type d'appareils. Toutefois, sans sortir du cadre de l'invention, des outils d'un genre différent pourraient être utilisés.

Les disques-outils selon l'invention sont mûs en rotation de manière autonome, c'est-à-dire indépendamment des mouvements du bras radial sur lequel ils sont montés, et c'est leur mode d'entraînement qui va être décrit maintenant.

Dans le cas où le diamètre du silo est relativement faible, et où un petit nombre de disques-outils - inférieur ou égal à six par exemple - est suffisant, l'appareil de désilage selon l'invention peut comprendre un moteur monté à une extrémité du bras radial, une courroie trapézoïdale ou un jeu de telles courroies reliant l'arbre de ce moteur à une poulie solidaire de l'arbre du disque-outil le plus proche de l'extrémité du bras radial où est installé le moteur, des roues dentées calées sur les arbres des divers disques-outils des chaînes à rouleaux dont chacune relie l'un de ces arbres au suivant par l'intermédiaire des roues dentées calées sur les arbres, et au moins un pignon fou par chaîne pour assurer la tension de la chaîne correspondante.

Si, au contraire, le nombre des disques-outils est élevé et, par exemple, supérieur à six, l'appareil pourra comprendre un moteur monté sensiblement au milieu du bras radial, deux courroies trapézoïdales ou deux jeux de telles courroies reliant l'arbre du moteur, respectivement, à deux poulies solidaires des arbres des deux disques-outils les plu proches du moteur, des roues dentées calées sur les arbres d divers disques-outils, des chaînes à rouleaux dont chacune relie l'un de ces arbres au suivant vers l'intérieur et, respectivement, vers l'extérieur du silo à partir des arbres le plus proches du moteur et par l'intermédiaire des roues dentées, ainsi qu'au moins un pignon fou par chaîne pour assure la tension de la chaîne correspondante.

Les spécialistes en la matière comprendront quel est l'intérêt des dispositions ci-dessus : si le nombre des disques-outils est important, il est avantageux de monter leur moteur d'entraînement au milieu du bras radial qui constitue l'âme de l'ensemble, parce que cela permet d'équilibrer les charges et de mieux répartir les couples d'entraînement vers les divers disques-outils. Si, au contraire, le diamètre du silo est faible, et si, en conséquence, peu de disques-outils sont utilisés, un seul train de chaînes à rouleaux est suffisant ce qui, en particulier, économise un jeu de poulies et de courroies.

On notera en outre que l'entraînement des disques-outils à partir du moteur peut être effectué au moyen de courroies, ce qui est avantageux du point de vue économique. En effet, ces courroies présentent une vitesse de défilement linéaire élevée et elles ne sont donc pas affectées par les poussières résultant de l'opération de désilage. Au contraire, les liaisons entre les divers arbres des disques-outils doivent être assurées par des chaînes et des roues dentées.

L'appareil de désilage selon l'invention ne serait pas complet s'il ne permettait pas d'assurer l'évacuation des matières situées au voisinage immédiat de la paroi du silo. A cette fin, il comprend, de préférence, une roue horizontale qui est munie d'ailettes élastiques en saillie, qui est montée à l'extrémité du bras radial la plus proche de la paroi du silo de telle manière que ses ailettes soient en appui élastique sur cette paroi, et qui est entraînée en rotation par un moteur. Avantageusement, cette roue à ailettes est munie sur sa face inférieure d'au moins un outil de coupe analogue à ceux des disques-outils décrits ci-avant.

De préférence, l'ensemble formé par cette roue à ailettes et son moteur d'entraînement est articulé sur le bras radial et rappelé élastiquement vers la paroi du silo, et il comporte une roulette horizontale d'écartement qui évite tout contact du corps de la roue à ailettes avec cette paroi.

On comprend que ce dispositif permet le nettoyage de la paroi du silo par râclage au moyen des ailettes élastiques de la roue à ailettes, ainsi que le désilage des matières au voisinage de cette paroi grâce à l'outil de coupe monté sur la face inférieure de cette roue.

La description qui va suivre, et qui ne présente aucun caractère limitatif, permettra de bien comprendre comment la présente invention peut être mise en pratique. Elle doit être lue en regard des dessins annexés, parmi lesquels :

- La figure 1 montre une vue de dessus du dispositif de désilage selon l'invention ;

- La figure 2 représente une vue de face de l'un des disques-outils de ce dispositif de désilage ;

- La figure 3 montre une vue en coupe, prise selon la ligne III-III de la figure 2 ;

- La figure 4 représente en élévation le mécanisme d'entraînement des disques-outils du dispositif de désilage selon l'invention ;

- La figure 5 est une vue de face de la roue à ailettes que comprend ce dispositif de désilage.

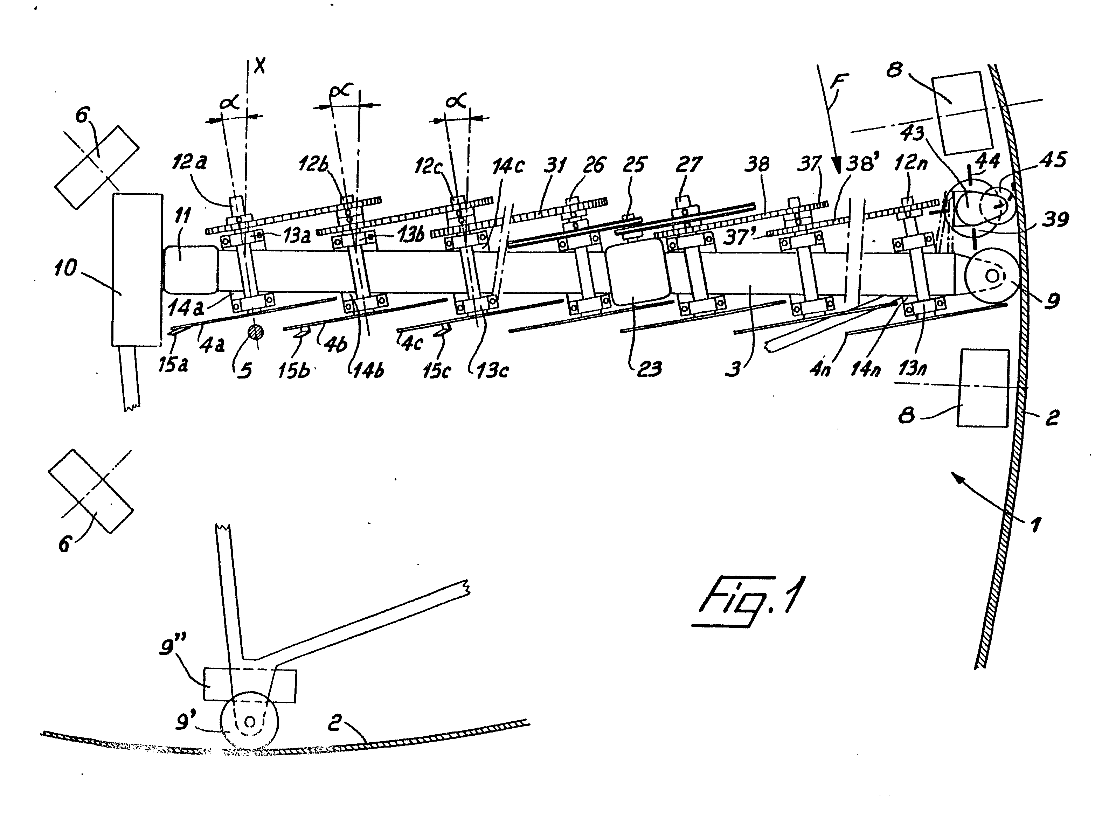

Comme on le voit sur la figure 1, le dispositif de désilage selon l'invention est monté à l'intérieur d'un silo 1 à paroi cylindrique 2, et il comprend, pour l'essentiel, un bras radial 3 sur lequel sont montés plusieurs disques-outils 4a, 4b ... 4n.

Le bras radial 3 est sensiblement horizontal et il s'étend entre l'axe vertical 5 et la paroi cylindrique 2 du silo 1. Au voisinage de l'axe 5 de ce dernier, deux roues porteuses 6 à axe horizontal et de hauteur réglable sont montées sur le bras 3, en faisant saillie à sa partie inférieure, au moyen d'une structure non représentée ; leur orientation est déterminée par celle du bras 3. A son autre extrémité, ce dernier comporte des roues 8 qui sont à la fois porteuses et motrices, qui sont montées symétriquement sur le bras radial et qui en sont rendues solidaires à une hauteur réglable grâce à un dispositif non représenté. De manière classique, ces roues 8 sont entraînées en rotation au moyen d'un moteur qui n'a pas non plus été montré sur la figure 1. Enfin, des roues de guidage 9 et 9' à axe vertical sont également montées sur le bras 3 au voisinage de la paroi 2 du silo 1, l'une d'entre elles, 9, étant

8   0084005

située à l'extrémité extérieure du bras 3, et l'autre, 9', associée à une roue porteuse 9", étant très largement décalée par rapport à la précédente. De manière connue, les roues porteuses 6 et 9", les roues porteuses et motrices 8, le moteur d'entraînement associé à chacune de ces dernières, et les roues de guidage 9 et 9' permettent au bras radial 3 de tourner de façon autonome autour de l'axe vertical 5 du silo tout en restant sensiblement parallèle à la surface libre de la matière à désiler sur laquelle il repose par les couples de roues 6 et 8 et par la roue 9".

Enfin, le bras 3 comporte également, au voisinage de l'axe 5 du silo 1, un ventilateur 10 à moteur horizontal 11 qui assure, au moyen de tuyaux non représentés, l'évacuation des matières désilées, ces matières étant amenées vers le centre du silo par le dispositif de désilage proprement dit qui va être décrit maintenant.

Selon l'invention, les disques-outils 4a ... 4n sont montés en avant du bras 3, compte tenu de son sens de rotation indiqué sur la figure 1 par la flèche F. Ils sont sensiblement verticaux et ils sont fixés par leurs centres en bout d'arbres 12a ... 12n , qui sont perpendiculaires aux disques et dont ils sont solidaires. Ces arbres 12 sont tous parallèles entre eux et ils sont montés mobiles en rotation dans des paliers qui sont désignés respectivement par les repères 13a.... 13n , et qui sont montés sur la face supérieure du bras radial 3 au moyen de plaques-supports 14a ... 14n , soudées sur ce bras 3. Les arbres 12 forment un angle $\alpha$ avec les droites horizontales de direction X qui sont perpendiculaires au bras 3, le sens de cet angle $\alpha$ étant tel que les disques-outils 4 qui, bien entendu, forment le même angle $\alpha$ avec le bras 3, soient inclinés vers l'extérieur.

De préférence, le plan de chaque disque-outil 4 est décalé de la même distance par rapport au précédent dans le sens des arbres 12. En d'autres termes, le plan de chaque disque, sauf celui des disques extrêmes, est intercalé entre le précédent et le suivant.

Il en résulte, bien entendu, que le diamètre de chaque disque, sauf peut-être pour le disque extrême le plus proche de l'axe 5 du silo - mais, en réalité, pour des raisons de construction évidentes, on préfère que tous les disques présentent le même diamètre - doit être inférieur à une valeur égale à celle de l'expression 2d.cos $\alpha$ , d étant la distance, mesurée le long du bras 3, entre deux paliers 13 consécutifs. Naturellement, cette valeur est aussi égale à 2D, D étant la distance entre deux arbres 12 consécutifs mesurée perpendiculairement à ces derniers. Inversement, et pour des raisons d'efficacité, on essaye de se rapprocher le plus possible de cette valeur 2D ou 2d.cos $\alpha$ pour le diamètre des disques, puisque la surface balayée par un disque-outil dans la masse à désiler augmente avec son diamètre.

Dans un exemple de réalisation particulier qui ne présente aucun caractère limitatif, mais qui a donné toute satisfaction, le bras 3 est constitué par un profilé en acier à section carrée de 150 mm de côté, et il supporte dix disques 4 dont le diamètre est de 600 ou 650 mm et dont l'épaisseur est de 4 à 5 mm ou plus. L'angle $\alpha$ est égal à 10° et la distance d entre deux paliers consécutifs est de 400 mm. Le bras 3 tourne à raison de 90°/mn environ.

Chaque disque-outil 4 est muni sur sa face avant, dans le sens de rotation du bras radial 3 indiqué par la flèche F, d'une pluralité d'outils de coupe dont un seul a été représenté pour chaque disque sur la figure 1 où il port le repère 15a pour le disque 4a, le repère 15b pour le disqu 4b, et ainsi de suite.

En outre, le sens de rotation de ces disques-outil 4 est celui des aiguilles d'une montre pour un observateur qui se trouve en face d'eux à la surface de la matière à désiler, afin que cette dernière soit entraînée vers l'intérieur du silo 1 où elle est évacuée par le ventilateur 10.

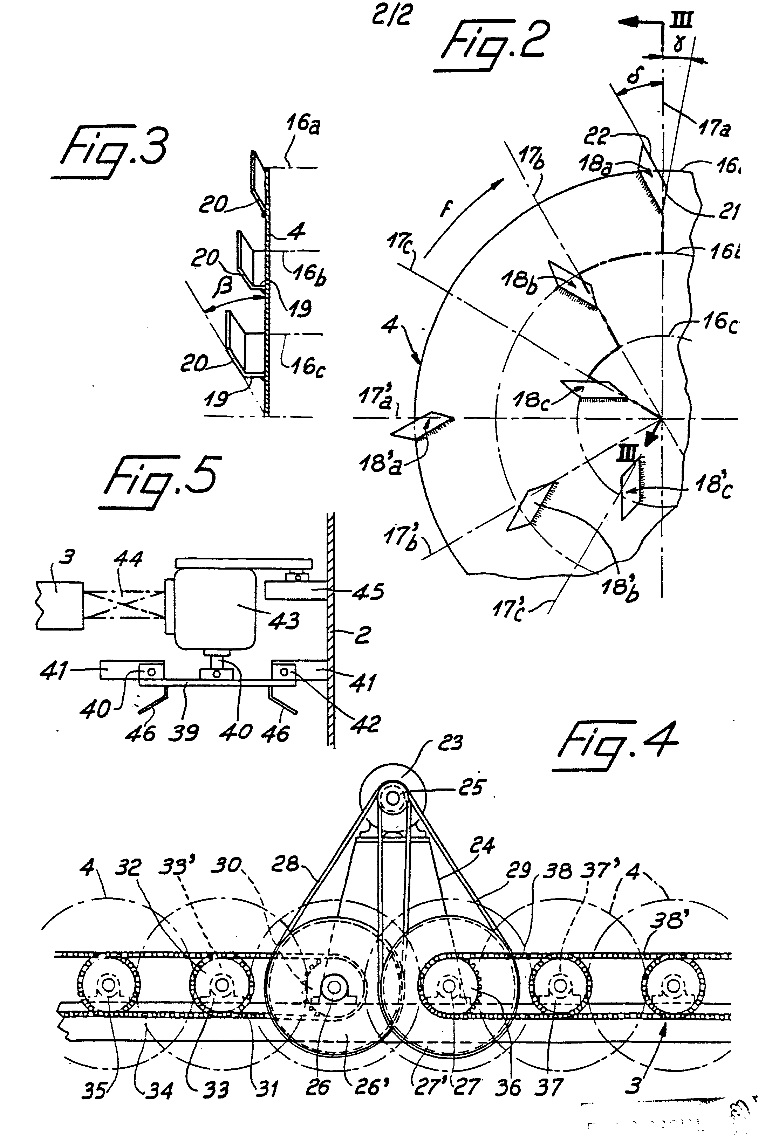

Chaque disque-outil 4 est muni de plusieurs séries d'outils, les divers outils d'une même série étant disposés à des distances différentes du centre du disque. Dans un exemple de réalisation qui a été représenté sur la figure 2, chaque disque-outil 4 comprend quatre séries de trois outils répartis sur trois cercles 16a, 16b et 16c qui sont centrés tous les trois sur le centre du disque, la distance entre les cercles interne 16c et médian 16b étant approximativement égale à la distance entre les cercles médian 16b et externe 16a, et ce dernier étant pratiquement confondu avec la périphérie du disque-outil 4.

En outre, les outils sont régulièrement répartis autour du disque 4, ce qui veut dire qu'ils sont situés sur des rayons 17a, 17b, etc., de ce disque qui le partagent en secteurs égaux, et ce, à raison d'un outil par rayon. Ainsi, dans le cas représenté de quatre séries de trois outils, soit douze outils au total pour le disque, les rayons 17a, 17b, etc., sont angulairement espacés entre eux de 360°/12 = 30°.

Plus précisément, les outils 18a, 18b et 18c de la première série se trouvent respectivement à l'intersection du cercle externe 16a et du rayon 17a, à l'intersection du cercle médian 16b et du rayon suivant 17b, et à l'intersection du cercle interne 16c et du rayon suivant 17c. Les outils 18'a, 18'b et 18'c de la série suivante sont situés respectivement à l'intersection du cercle externe 16a et du rayon suivant 17'a, à l'intersection du cercle médian 16b et du rayon suivant 17'b et à l'intersection du cercle interne 16c et du rayon suivant 17'c, et ainsi de suite pour les séries d'outils suivantes qui n'ont pas été représentées sur la figure 2.

Chaque outil 18 est constitué par une plaquette rectangulaire 19 (voir figure 3) qui est soudée sur le disque 4 le long de l'un de ses grands côtés et perpendiculairement au disque, et qui se prolonge vers la périphérie du disque 4 par une partie 20 en parallélogramme inclinée vers l'extérieur d'un angle $\beta$ - le même pour tous les outils - par rapport au plan du disque. De préférence, cet angle $\beta$ est voisin de 30°, mais il peut être compris entre 20° et 40°. En outre, pour une même série d'outils, la hauteur de la plaquette rectangulaire 19 va en décroissant du cercle interne 16c au cercle externe 16a, et la hauteur de la plaquette qui est le plus à l'extérieur, donc sur le cercle 16a, peut être sensiblement nulle, de sorte que l'outil correspondant se résume à sa partie inclinée 30 qui est soudée au bord du disque 4 en s'étendant vers l'extérieur de ce dernier.

Il faut encore noter que la position de chaque outil a été définie comme l'intersection d'un cercle et d'un rayon qui se réduit à un point, alors que, bien entendu, les outils en question n'ont rien de ponctuel. En réalité, c'est au voisinage du point d'intersection correspondant que l'on vient souder chaque outil, son positionnement effectif n'étant d'ailleurs nullement critique, et c'est uniquement pour la clarté de la description que l'on a fait appel à des points géométriques pour définir la position des outils.

En revanche, la conformation des outils proprement dits, donc, pour l'essentiel, des plaquettes inclinées 20, constitue un paramètre important. Plus précisément, les plaquettes inclinées en parallélogramme 20 de tous les outils sont identiques entre elles ; vue en plan, chaque plaquette 20 se caractérise par un bord d'attaque 21 (voir en haut de la figure 2) formant un angle $\gamma$ avec le rayon 17 qui passe par le sommet avant (dans le sens de rotation $\underline{f}$ indiqué sur la figure) du parallélogramme constituant la plaquette 20, et par une arête en couteau 22 formant un angle $\delta$ avec ce même rayon 17. Bien entendu, la donnée des angles $\beta$, $\gamma$ et $\delta$ permet d'en déduire l'angle aigu $\varphi$ au sommet du parallélogramme que constitue chaque plaquette 20.

De préférence, l'angle $\gamma$ est nul, de sorte que le bord d'attaque 21, toujours vu en plan, se confond avec le rayon 17, et l'angle $\delta$ est voisin de 28°. Toutefois, l'angle $\gamma$ peut présenter une valeur allant jusqu'à 10°, dans un sens ou dans l'autre par rapport au rayon 17, et l'angle $\delta$ peut être compris entre 25° et 35°.

A titre indicatif, et compte tenu du fait que, lors de la fabrication des plaquettes 20 en forme de parallélogrammes, c'est l'angle réel de ces parallélogrammes qui importe, et non sa projection sur le plan des disques-outils, on signalera que, pour un angle $\beta$ compris entre 20° et 40°, pour un angle $\gamma$ allant de +10° à -10°, et pour un angle $\delta$ compris entre 25° et 35°, l'angle aigu $\varphi$ du parallélogramme est compris entre 16° et 52°. On choisira avantageusement

0084005

pour cet angle une valeur qui n'est pas trop éloignée de 45°.

Compte tenu de ce qui précède, on comprend que le bord d'attaque 21, puis le couteau 22 de chaque outil 18, lors de la rotation du disque-outil 4 dans le sens de la flèche f, dégagent, puis tranchent une couche de matière à désiler dont la profondeur, dans le sens radial, correspond à la hauteur des plaquettes rectangulaires soudées 19, et dont l'épaisseur, dans le sens vertical, correspond à la distance entre les outils d'une même série. Du fait du sens de rotation des disques-outils 4, la matière ainsi désilée est poussée vers le centre du silo où elle est reprise, de manière classique, par le ventilateur 10.

Dans l'exemple cité ci-avant, on a utilisé des disques 4 comprenant quatre séries de trois outils qui sont donc espacés angulairement de 30°, ainsi que cela a déjà été indiqué. Les angles $\beta$ et $\delta$ étaient respectivement égaux à 30° et à 28°, l'angle aigu réel $\varphi$ du parallélogramme 20 étant par construction de 45° environ. La hauteur de chaque plaquette rectangulaire soudée 19, prise perpendiculairement au plan du disque 4, était de 40 ou 50 mm pour les outils situés au voisinage du cercle interne 16c, de la moitié environ pour les outils montés près du cercle médian 16b, et sensiblement nulle pour les outils soudés à la périphérie du disque 4. Enfin, la distance radiale entre les outils d'une même série était de 30 mm environ. On taille ainsi dans la matière à désiler des "marches" dont la hauteur est de 30 mm et la largeur de 20 ou 25 mm.

On décrira maintenant, en regard de la figure 4, le dispositif selon l'invention qui permet l'entraînement en rotation des disques-outils 4. Ce mécanisme est situé de l'autre côté du bras radial 3 par rapport aux disques-outils 4, donc à l'arrière de ce bras lorsqu'il se déplace en rotation, et il comprend un moteur 23 solidaire d'un bâti trapézoïdal 24 qui est monté sur la partie supérieure du bras radial 3.

Dans le cas où le nombre des disques-outils est supérieur à six, qui est celui représenté sur la figure 4, une poulie 25 montée sur l'arbre du moteur 23 entraîne les arbres 26 et 27 des deux disques-outils les plus proches par l'entremise de deux jeux de courroies trapézoïdales 28 et, respectivement, 29, et de poulies 26' et 27' solidaires respectivement des arbres 26 et 27. De préférence, le moteur 23 est monté à égale distance des deux arbres 26 et 27.

C'est alors à partir des arbres 26 et 27 que les autres disques-outils sont entraînés en rotation au moyen de chaînes à rouleaux. En effet, l'arbre 26 que l'on supposera être plus proche de l'axe du silo que l'arbre 27 porte une roue dentée 30 qui, au moyen d'une chaîne à rouleaux 31, entraîne en rotation une roue dentée menée 32 solidaire de l'arbre 33 du disque-outil immédiatement suivant dans le sens allant vers l'intérieur du silo. Cet arbre 33 est aussi solidaire d'une roue dentée menante 33' (voir aussi la figure 1) qui engrène avec une autre chaîne à rouleaux 34, laquelle engrène à son tour avec une roue menée calée sur l'arbre suivant 35, et ainsi de suite jusqu'au disque-outil le plus proche de l'axe du silo. De même, en allant vers l'extérieur du silo, l'arbre 27 porte une roue dentée 36 qui entraîne une roue 37 calée sur l'arbre du disque-outil suivant au moyen d'une chaîne à rouleaux 38. Ensuite, une roue dentée menante 37' calée sur le même arbre que la roue dentée menée 37 engrène avec une autre chaîne 38' qui entraîne l'arbre suivant, et ainsi de suite jusqu'au disque-outil le plus proche de la paroi 2 du silo. On comprend que l'arbre de chaque disque-outil, comme on le voit clairement sur la figure 1, est muni d'une roue dentée menante et d'une roue dentée menée, à l'exception des arbres centraux 26 et 27 munis seulement d'une roue menante, et des arbres extrêmes qui ne comportent qu'une roue menée. La tension des chaînes à rouleaux est assurée, de manière classique, par des pignons fous non figurés, à raison d'au moins un pignon fou par chaîne.

Il faut remarquer à ce sujet que l'entraînement des arbres 26 et 27 à partir du moteur 23 peut être réalisé au moyen de courroies, ce qui est avantageux du point de vue économique. En effet, ces courroies, du fait de leur vitesse de défilement linéaire élevée, ne sont pas affectées par les poussières résultant de l'opération de désilage. Il n'en est pas de même, bien entendu, pour les liaisons entre les divers arbres des disques-outils, lesquelles doivent être assurées par des transmissions par chaînes.

Dans le cas, non représenté, où le nombre des disques-outils 4 est inférieur ou égal à six, il est possible de monter le moteur 23 à une extrémité du bras radial 3. Ce moteur entraîne alors un seul jeu de courroies trapézoïdales qui, à son tour, entraîne une seule série de chaînes à rouleaux et, par leur intermédiaire, l'ensemble des disques-outils.

A titre indicatif, dans l'exemple de réalisation décrit ci-avant, le moteur 23 présente une puissance de 10 CV et il tourne avec une vitesse de rotation comprise entre 1.350 et 1.500 tours par minute. Par l'intermédiaire de deux jeux de courroies trapézoïdales, sa poulie 25 de diamètre égal à 100 mm entraîne les poulies 26' et 27' solidaires des arbres 26 et 27, poulies dont le diamètre est de 500 mm. La vitesse de rotation des disques-outils 4, compte tenu de ce rapport de réduction, est alors comprise entre 270 et 300 tours par minute.

Le dispositif de désilage selon l'invention peut comprendre en outre des moyens pour nettoyer par râclage la paroi du silo au niveau du bras radial 3 et pour réaliser le désilage au voisinage de cette paroi, ces opérations étant effectuées en même temps que le désilage de l'intérieur du silo qui se fait ainsi que cela vient d'être décrit.

Ces moyens comprennent une roue 39 à axe vertical 40 (voir figure 5) munie d'ailettes élastiques 41 et montée à l'extrémité du bras radial 3 qui est adjacente à la paroi 2 du silo. Les ailettes 41 s'étendent horizontalement vers l'extérieur de la roue 39 en faisant saillie au-delà de la périphérie de cette roue, et elles sont réalisées en une matière élastique comme le caoutchouc ou une matière plastique appropriée. En outre, elles sont rendues solidaires de la roue 39 par tout moyen convenable comme, par exemple, par boulonnage sur des pattes 42 soudées sur la roue 39.

L'ensemble constitué par la roue 39 et les ailettes 41 est entraîné en rotation de manière autonome dans le même sens que le bras radial 3 au moyen d'un moteur 43 à ax

vertical qui est relié à l'axe 40 de la roue 39 par l'intermédiaire d'un réducteur. Ce moteur 43 est rendu solidaire du bras radial 3 par une tringlerie figurée schématiquement en 44 qui comprend un dispositif élastique de rappel non représenté et qui appuie les ailettes 41 de la roue 39 sur la paroi du silo. Une roulette d'écartement 45 fixée par exemple sur le moteur 43 ou sur la tringlerie 44 détermine la distance minimale entre l'axe 40 de la roue 39 et la paroi 2 du silo, et elle évite ainsi tout contact entre la roue 39 proprement dite et la paroi du silo. Ce sont donc les ailettes élastiques 41, et elles seulement, qui viennent râcler cette paroi pour la nettoyer.

Enfin, des outils 46 analogues aux outils 15 des disques-outils 4 de la figure 1 peuvent être montés sur la face inférieure de la roue 39 pour désiler la couche de matières au voisinage de la paroi 2 du silo.

A titre indicatif, on signalera que le diamètre de la roue 39 peut être de l'ordre de 200 à 300 mm, soit environ la moitié de celui des disques-outils 4, sa vitesse de rotation étant par exemple voisine de 300 tours par minute. Un moteur 43 d'une puissance de 1,5 CV convient parfaitement pour entraîner en rotation la roue 39. Cette dernière peut comporter quatre ailettes régulièrement réparties sur son pourtour et elle peut être munie de quatre outils 46 à la périphérie de sa face inférieure.

Sans sortir du cadre de la présente invention, il est possible d'apporter diverses modifications aux formes de réalisation qui viennent d'être décrites. C'est ainsi, par exemple, que les outils 18 d'une même série (voir figure 2) pourraient être montés sur un même rayon du disque-outil correspondant. En outre, pour des raisons de sécurité, il y a lieu de protéger par un carter les disques-outils et leur mécanisme d'entraînement.

## - REVENDICATIONS -

1. Appareil de désilage du genre comprenant, dans un silo cylindrique, un bras radial sensiblement horizontal qu: s'étend entre l'axe vertical du silo et sa paroi cylindriqu· qui est mû en rotation de manière autonome autour de l'axe du silo et qui est muni de disques-outils sensiblement para. lèles entre eux et perpendiculaires à la surface libre de l matière à désiler sur laquelle le bras radial repose par de roues porteuses dont certaines sont également motrices, caractérisé en ce que lesdits disques-outils (4a ... 4n) so entraînés en rotation autour de leurs axes respectifs (12a .. 12n) montés sur ledit bras radial (3), sont peu inclinés par rapport audit bras radial (3) et sont munis d'outils de coupe (15a ... 15n) sur leur face frontale dans le sens de déplacement (F) du bras radial (3), le sens de rotation des disques-outils (4a ... 4n) étant celui qui entraîne vers l'intérieur du silo les matières ainsi désilées.

2. Appareil de désilage selon la revendication 1, caractérisé en ce que lesdits disques-outils (4a ... 4n) sont inclinés vers l'extérieur du silo et forment un angle ($\alpha$) compris entre 0° et 20°, et, de préférence, entre 5° et 15° avec le bras radial (3).

3. Appareil de désilage selon l'une quelconque des revendications 1 et 2, caractérisé en ce que le plan de chacun des disques-outils (4a ... 4n), qui sont tous ident ques entre eux, est décalé de celui du suivant de la même quantité et dans le même sens, les arbres (12a ... 12n) de ces disques-outils (4a ... 4n) étant montés dans des paliers (13a ... 13n) qui sont fixés à intervalles réguli· le long du bras radial (3).

4. Appareil de désilage selon l'une quelconque des revendications 1 à 3, caractérisé en ce que le diamètre d· chaque disque-outil (4a ... 4n) est compris entre une et deux fois la distance qui sépare les arbres (12a ... 12n) de deux disques-outils consécutifs, cette distance étant mesurée perpendiculairement à ces arbres.

5. Appareil de désilage selon l'une quelconque des revendications 1 à 4, caractérisé en ce que chaque disque-outil (4a ... 4n ) est muni d'une pluralité d'outils (18a, 18b, etc.) dont chacun est constitué par une plaquette rectangulaire (19) perpendiculaire au plan dudit disque-outil et prolongée vers l'avant et vers l'extérieur par un couteau (20) en forme de parallélogramme qui est incliné par rapport au plan du disque-outil.

6. Appareil de désilage selon la revendication 5, caractérisé en ce que ledit couteau (20) est incliné par rapport au plan du disque-outil d'un angle $(\beta)$ compris entre 20° et 40°, et, de préférence, voisin de 30°.

7. Appareil de désilage selon l'une quelconque des revendications 5 et 6, caractérisé en ce que, ledit disque-outil étant vu de face, le petit côté (21) dudit couteau (20) qui est en avant dans le sens de rotation du disque-outil et qui constitue une arête d'attaque forme un angle $(\gamma)$ inférieur à 10°, et, de préférence, nul, avec tout rayon du disque-outil qui passe par ladite arête d'attaque.

8. Appareil de désilage selon l'une quelconque des revendications 5 à 7, caractérisé en ce que, ledit disque-outil étant vu de face, le grand côté (22) dudit couteau (20) qui est en avant dans le sens de rotation du disque-outil et qui constitue une arête de coupe forme un angle $(\delta)$ compris entre 25° et 35°, et, de préférence, voisin de 30° avec tout rayon du disque-outil qui passe par ladite arête d'attaque.

9. Appareil de désilage selon l'une quelconque des revendications 5 à 8, caractérisé en ce que lesdits outils (18a, 18b, etc.) sont montés sur leur disque-outil (4a ... 4n ) à l'intersection de cercles équidistants (16a, 16b, 16c) centrés sur le centre du disque avec des rayons de ce disque (18a, 18b, etc.) angulairement espacés de manière régulière, à raison d'un outil par rayon.

10. Appareil de désilage selon l'une quelconque des revendications 5 à 9, caractérisé en ce que la hauteur desdites plaquettes rectangulaires (19), prise perpendiculairement au plan du disque-outil, va en décroissant du centre du disque-outil vers sa périphérie.

11. Appareil de désilage selon l'une quelconque des revendications 1 à 10, caractérisé en ce que, pour l'entraînement en rotation desdits disques-outils (4a ... 4n), il comprend un moteur (23) monté à une extrémité dudit bras radial (3), au moins une courroie trapézoïdale reliant l'arbre du moteur à une poulie solidaire de l'arbre du disque-outil le plus proche de l'extrémité du bras radial (3) où est installé le moteur (23), des roues dentées calées sur les arbres des disques-outils, des chaînes à rouleaux dont chacun relie l'un de ces arbres au suivant par l'intermédiaire des roues dentées calées sur les arbres, et au moins un pignon fo par chaîne pour assurer la tension de la chaîne correspondant

12. Appareil de désilage selon l'une quelconque des revendications 1 à 10, caractérisé en ce que, pour l'entraînement en rotation desdits disques-outils (4a ... 4n), il comprend un moteur (23) monté sensiblement au milieu du bras radial (3), deux courroies trapézoïdales ou deux jeux de telles courroies (28, 29) reliant l'arbre (25) du moteur (23) à deux poulies (26', 27') solidaires respectivement des arbres (26, 27) des deux disques-outils les plus proches du moteur (23), des roues dentées calées sur les arbres des divers disques-outils, des chaînes à rouleaux (31, 34, 38, 38') don· chacune relie l'un desdits arbres au suivant vers l'intérieu: et, respectivement, vers l'extérieur du silo à partir des arbres (26, 27) les plus proches du moteur (23) et par l'intermédiaire des roues dentées (30, 32, 33', 36, 37, 37'), et au moins un pignon fou par chaîne pour assurer la tension de la chaîne correspondante.

13. Appareil de désilage selon l'une quelconque des revendications 1 à 12, caractérisé en ce qu'il comprend une roue horizontale (39) qui est munie d'ailettes élastiques (41) faisant saillie vers l'extérieur de cette roue (39), qui est montée à l'extrémité du bras radial (3) la plus proche de la paroi (2) du silo de telle manière que ses ailettes (41) soient en appui élastique sur la paroi (2) du silo, et qui est entraînée en rotation par un moteur (43).

14. Appareil de désilage selon la revendication 13, caractérisé en ce que ladite roue horizontale (39) comporte à sa partie inférieure au moins un outil de coupe (46) qui est analogue à ceux (18a, 18b, etc.) des disques-outils.

15.        Appareil de désilage selon l'une quelconque des revendications 13 et 14, caractérisé en ce que l'ensemble constitué par ladite roue horizontale (39) et son moteur d'entraînement (43) est articulé sur ledit bras radial (3) et rappelé vers la paroi (2) du silo par un dispositif élastique (44), cet ensemble étant solidaire d'une roulette d'écartement (45) dont le point d'appui sur la paroi (2) du silo détermine la distance minimale entre cette paroi (2) et ladite roue horizontale (39).

*Fig.1*

0084005

0084005

*Fig.2*

*Fig.3*

*Fig.5*

*Fig.4*

# 0084005

Office européen
des brevets

## RAPPORT DE RECHERCHE EUROPEENNE

Numéro de la demande

EP 83 40 0027

| | DOCUMENTS CONSIDERES COMME PERTINENTS | | |
|---|---|---|---|
| Catégorie | Citation du document avec indication, en cas de besoin, des parties pertinentes | Revendication concernée | CLASSEMENT DE LA DEMANDE (Int. Cl. 3) |
| A | FR-A-1 413 310 (SCHWARTING) * Page 2, colonne de gauche dernier et avant dernier paragraphe et colonne de droite; page 3, colonne de gauche; figures 1-15 * | 1 | A 01 F 25/20 B 65 G 65/38 |
| | --- | | |
| A | GB-A-2 058 710 (ENGELBRECHT) * Page 1, lignes 89-129; page 2, lignes 1-37; figures 1,2,3 * | 1,13 | |
| | ----- | | |

**DOMAINES TECHNIQUES RECHERCHES (Int. Cl. 3)**

A 01 F
B 65 G

Le présent rapport de recherche a été établi pour toutes les revendications

| Lieu de la recherche LA HAYE | Date d'achèvement de la recherche 05-04-1983 | Examinateur VERMANDER R.H. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82